(19) Europäisches Patentamt
European Patent Office
Office européen des brevets

(11) **EP 4 354 364 B1**

(12) **FASCICULE DE BREVET EUROPEEN**

(45) Date de publication et mention
de la délivrance du brevet:
**07.05.2025 Bulletin 2025/19**

(21) Numéro de dépôt: **22306535.0**

(22) Date de dépôt: **11.10.2022**

(51) Classification Internationale des Brevets (IPC):
***G06Q 10/00*** *(2023.01)*

(52) Classification Coopérative des Brevets (CPC):
**G06Q 10/00**

(54) **PROCEDE DE GENERATION D'UN INVENTAIRE D'EMISSIONS DE GAZ A EFFET DE SERRE**

VERFAHREN ZUR ERZEUGUNG EINES TREIBHAUSGASEMISSIONSINVENTARS

METHOD FOR GENERATING GREENHOUSE GAS EMISSION INVENTORY

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(43) Date de publication de la demande:
**17.04.2024 Bulletin 2024/16**

(73) Titulaire: **Origins**
**92040 Paris la Défence Cedex (FR)**

(72) Inventeur: **UTARD, Hervé**
**35370 Argentré du Plessis (FR)**

(74) Mandataire: **Lavoix**
**2, place d'Estienne d'Orves**
**75441 Paris Cedex 09 (FR)**

(56) Documents cités:
• **DA HUO ET AL: "Carbon Monitor Cities, near-real-time daily estimates of CO2 emissions from 1500 cities worldwide", ARXIV.ORG, CORNELL UNIVERSITY LIBRARY, 201 OLIN LIBRARY CORNELL UNIVERSITY ITHACA, NY 14853, 16 April 2022 (2022-04-16), XP091205083**

**Description**

La présente invention concerne le domaine de l'inventaire d'émissions de gaz à effet de serre.

Les gaz à effet de serre sont les gaz qui absorbent le rayonnement infrarouge émis par la surface terrestre et contribuent ainsi à l'effet de serre. L'augmentation de leur concentration dans l'atmosphère terrestre dû à l'activité anthropique est l'un des facteurs à l'origine du réchauffement climatique.

Les gaz à effet de serre comprennent entre autres le $CO_2$, $CH_4$, $N_2O$.

L'effet de serre est principalement dû à la vapeur d'eau et aux nuages, c'est à dire à l'eau présente dans l'atmosphère. L'effet de serre dû à la vapeur d'eau et aux nuages représente sensiblement les trois-quarts de l'effet de serre global ; le reste de l'effet de serre étant dû essentiellement au dioxyde de carbone ($CO_2$).

Les concentrations en gaz à effet de serre dans l'atmosphère terrestre augmentent pour des raisons essentiellement anthropiques, c'est-à-dire pour des raisons liées aux activités humaines. Selon le Groupe d'experts intergouvernemental sur l'évolution du climat (GIEC), le total des émissions anthropiques de gaz à effet de serre a fortement augmenté dans l'atmosphère depuis l'époque préindustrielle et est composé à 75% de dioxyde de carbone (CO2), à 18% de méthane (CH4), à 4% d'oxyde nitreux (N2O) et à 2% de gaz fluorés (gaz F).

Le dioxyde de carbone ($CO_2$) est responsable de près de 65 % de l'effet de serre d'origine anthropique. La concentration de dioxyde de carbone dans l'atmosphère a ainsi augmenté de près de 50 % depuis le milieu du XVIII[ème] siècle.

Ainsi, l'identification, la quantification et le suivi des émission de gaz à effet de serre d'origine anthropique et/ou biogénique sont indispensables pour piloter les projets et actions mis en place dans le cadre de la lutte contre le réchauffement climatique.

Il est ainsi souhaitable de disposer d'outils permettant l'identification, la quantification et le suivi des émission de gaz à effet de serre d'origine anthropique et/ou biogénique.

Il existe des outils permettant la génération d'inventaires d'émissions de GES. Par exemple, l'article de DA HUO et al., "Carbon Monitor Cities, near-real-time daily estimates of C02 emissions from 1500 cities worldwide", ARXIV.ORG, CORNELL UNIVERSITY LIBRARY, 201 OLIN LIBRARY CORNELL UNIVERSITY ITHACA, NY 14853, 16 avril 2022, XP091205083 divulgue une approche descendante.

Cependant, les outils actuels à disposition génèrent des données qui manquent de précisions (par exemple à une résolution spatiale élevée) ou sont trop anciennes. On connaît notamment un inventaire d'émissions de GES fourni par le CITEPA. Cependant, les données fournies correspondent aux valeurs d'émissions sur une année A-2 par rapport à l'année actuelle, cet écart correspondant au temps d'expertise desdites valeurs.

On connaît également la base de données EDGAR (Emissions Database for Global Atmospheric Research) fournissant une cartographie des émissions de GES par analyse d'images satellites. Cependant, la spatialisation des émissions est réalisée selon une résolution de l'ordre de plusieurs kilomètres et la temporalisation desdites émissions se base uniquement sur des profils temporels théoriques, ce qui peut poser problème quant à la fiabilité et à la qualité des données générées. En outre, les données d'émissions sont mises à jour à l'année A-1 par rapport à l'année actuelle. Il existe donc le besoin d'un inventaire spatial des émissions de gaz à effet de serre issues d'activités anthropique et/ou biogénique dans une zone géographique donnée d'une résolution spatiale précise (par exemple de l'ordre du bâtiment) pour une période ou à un instant donné (par exemple de l'ordre du temps réel).

A cet effet, on propose un procédé de génération d'inventaires d'émissions de gaz à effet de serre et un dispositif de génération d'inventaires d'émissions de gaz à effet de serre selon les revendications annexées.

D'autres particularités et avantages de l'invention ressortiront à la lecture de la description faite ci-après d'un mode de réalisation particulier de l'invention, donné à titre indicatif, mais non limitatif, en référence au dessin annexé sur lequel :

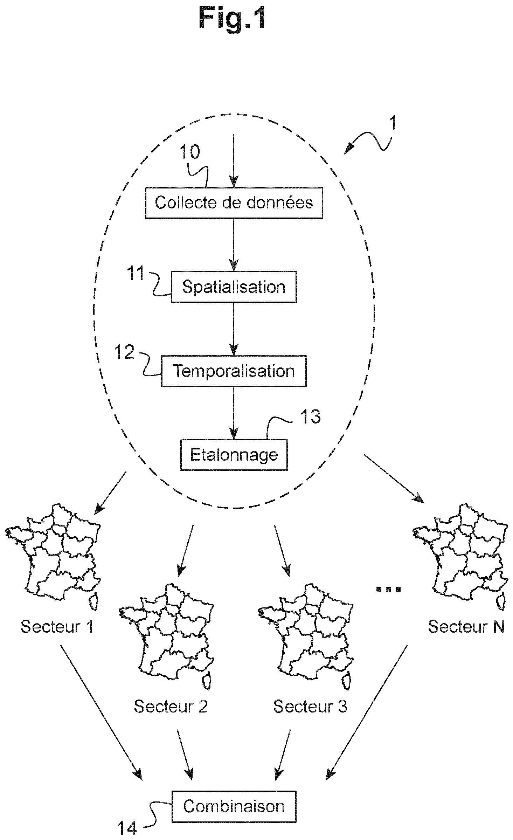

[Fig. 1] est un organigramme du procédé selon l'invention.

**Fonctionnement général** :

Le procédé 1 selon l'invention comprend quatre étapes principales et une ou plusieurs étapes de vérification.

Ces étapes sont illustrées [Fig. 1].

La première étape est une étape de collecte 10 de données pour un secteur d'activité donné, à partir d'une pluralité de bases de données.

Ces données collectées peuvent comprendre :

- Des données d'émission. Il s'agit de données concernant les émissions des gaz à effet de serre (GES) décrivant par exemple le taux d'émission de GES d'une activité dans une unité pertinente pour cette activité. Ces données peuvent par exemple être collectées dans la base de données Ominea publiée par le CITEPA (Centre interprofessionnel technique d'études de la pollution atmosphérique) ou encore dans la base de données Base Carbone de l'ADEME (Agence de l'environnement et de la maîtrise de l'énergie).

- Des données d'activité. Il s'agit de données concernant des activités temps-réel potentiellement émettrices de GES se déroulant dans une zone géographique définie d'un espace géographique. Il peut s'agir de données quantitatives tel que le nombre de voitures, la présence de sites industriels, la quantité d'énergie utilisée par un bâtiment, etc. Les sources de données spécifiques utilisées pour caractériser cette activité dépendent du secteur d'activité ; des exemples typiques sont énumérés dans les rapports Ominea publiés par le CITEPA pour les inventaires au niveau national, et dans le rapport PCIT (Pôle de Coordination des Inventaires Territoriaux) sur lequel s'appuient les AASQA (Associations agréées de surveillance de la qualité de l'air) pour les inventaires au niveau territorial.
- Des données de type séries temporelles :

  ◦ Basées sur les données d'activité, idéalement d'une résolution temporelle de l'ordre de l'heure qui peuvent être transformées en une quantité proportionnelle aux émissions pour un secteur donné.
  ◦ Théorique, dans les cas où aucune donnée d'activité n'a pu être identifiée. Les séries temporelles théoriques sont fournies par l'INS (Inventaire National Spatialisé) de l'INERIS (Institut national de l'environnement industriel et des risques). Elles décrivent l'intensité des activités par secteur d'activité SNAP3 ou sous-secteur SNAP3, avec une résolution mensuelle, quotidienne ou horaire à l'échelle nationale, régionale, départementale ou communale.

S'ensuit une deuxième étape de spatialisation 11 pour un secteur d'activité donné. On combine les différentes données collectées durant la première étape afin d'obtenir un inventaire spatialisé représentant les émissions de GES dans une zone géographique définie.

La quantité et la précision des données collectées permettent de générer un inventaire spatialisé d'une résolution de l'ordre du bâtiment.

La troisième étape consiste à temporaliser 12 les inventaires d'émissions spatialisés obtenus à la deuxième étape, par secteur d'activité. Le résultat de l'étape de spatialisation combiné à des séries temporelles permet d'obtenir un inventaire fiable des émissions de GES en quasi temps-réel, par exemple jusqu'à la dernière heure. Par « quasi temps-réel », on entend une période précédant l'instant temps réel, par exemple l'heure précédent l'instant t.

A l'issue de ces étapes, on obtient, pour un secteur d'activité donné, un inventaire spatialisé (pouvant aller jusqu'à l'échelle d'un bâtiment) et temporalisé (par exemple, les émissions de GES dudit bâtiment datant d'il y a une heure).

Chacune de ces étapes est réalisée pour chaque secteur d'activité. On obtient ainsi un inventaire par secteur d'activité.

L'étape suivante consiste en la combinaison 14 de tous les inventaires générés afin d'obtenir un inventaire global des émissions de GES, tous secteurs d'activité confondus.

Au moins une étape de vérification ou d'étalonnage 13 des valeurs obtenues est ensuite mise en œuvre. Cette étape permet de s'assurer de la qualité des données calculées et d'éviter l'obtention de données improbables ou défectueuses. Les émissions obtenues sont ainsi comparées aux émissions de référence du CITEPA (pour la dernière année de données disponibles, soit A-2), calculées à l'échelle nationale pour la combinaison de secteurs SNAP3 désirée. Le rapport entre les émissions calculées et les émissions de référence est utilisé pour mettre à l'échelle les émissions calculées, de sorte que les émissions totales produites par l'inventaire dynamique soient égales aux dernières émissions disponibles rapportées par le CITEPA.

Une seconde étape de contrôle de la qualité des données calculées peut être mise en œuvre par rapport à d'autres inventaires tels que EDGAR, ODIAC, AASQA, INERIS.

Les émissions de GES sont classées selon trois catégories distinctes. Cette classification par « scope » (périmètre) a été définie par l'ADEME (Agence de l'environnement et de la maîtrise de l'énergie), mais l'invention pourrait être mise en œuvre pour tout autre classification existante ou définie.

*Scope 1* : correspond aux émissions directes liées à chaque secteur d'activité en retirant les émissions liées à la production d'électricité de chaleur et de froid. Les émissions dues à la consommation de gaz et de combustibles fossiles sont incluses.

*Scope 2* : concerne les émissions indirectes liées à la production de l'énergie qui est consommée sur le territoire.

*Scope 3* : fait référence aux émissions résultant d'activités sur la zone géographique de l'administration locale. Les émissions du *scope 3* comprennent toutes les émissions qui ne sont pas comptabilisées par les *scopes 1 et 2.* Par exemple, les émissions liées à la production de nourriture consommée par la population, à la production de biens, etc.

Au sein des émissions du *scope 1*, les secteurs d'activités de référence sont définis par le PCAET (Plan Climat-Air-Energie Territorial) comme suit :

- Industrie autre que la branche énergie
- Secteur de l'énergie, autre que la production d'électricité, de chaleur et de froid - les émissions correspondantes sont comptabilisées en fonction de leur consommation. Les émissions du scope 1 pour le secteur de l'énergie couvrent les émissions des puits de pétrole, des mines de charbon, des raffineries de pétrole, de la livraison de gaz, etc.

- Déchets
- Tertiaire
- Résidentiel
- Transport routier
- Autres transports
- Agriculture

Ces secteurs d'activités de référence sont divisés en sous-secteurs SNAP3 différenciant les professions liées à chacun de ces secteurs d'activités.

Les secteurs SNAP sont une nomenclature sélective pour la pollution atmosphérique. Les activités sont décomposées en 11 secteurs d'activité (SNAP1), eux-mêmes décomposés en 2 niveaux supplémentaires. Cette catégorisation a été réalisée par Corinair, le programme européen initié par la Task Force de l'Agence Européenne de l'Environnement pour établir un inventaire des émissions de polluants atmosphériques en Europe.

On obtient ainsi des inventaires d'émissions de GES pour chaque secteur SNAP3. Il existe un autre type de nomenclature des secteurs d'activité appelé la nomenclature NAF2 pour Nomenclature d'Activités Française version 2. Cette nomenclature, élaborée par l'INSEE, décrit l'organisation économique et sociale des entreprises en France.

La nomenclature NAF2 recense les activités économiques par opposition à la nomenclature SNAP3 qui distingue les professions.

L'inventaire généré par le procédé 1 selon l'invention repose également sur la notion de découpage d'un territoire ou d'un espace géographique, et dans le cas du territoire français, sur la notion d'îlot IRIS.

IRIS (Ilots Regroupés pour l'Information Statistique) est un système de découpage du territoire en unités de taille égale développé par l'INSEE. La taille d'une unité IRIS dépend de la densité de population d'une zone géographique. Une unité IRIS comprend environ 2000 habitants. Ainsi, selon la densité de population d'une zone géographique, une unité IRIS peut comprendre un groupe de bâtiments voisins comme une commune entière.

Nous détaillons à présent les étapes permettant d'obtenir les émissions de GES pour chaque secteur d'activité du *scope 1* et pour le *scope 2.*

Pour chacun des secteurs d'activité du scope 1 et pour le scope 2, on effectue une étape de collecte de données pertinentes pour le secteur d'activité, une étape de spatialisation permettant d'obtenir une carte des émissions de GES pour la dernière année de données disponibles puis une étape de temporalisation afin de calculer pour une zone géographique donnée, une valeur d'émission de GES. Une étape de vérification des valeurs et résultats obtenus peut éventuellement avoir lieu par rapport à des valeurs de référence.

Pour le secteur industriel :

Les principales données collectées pour la spatialisation des émissions liées au secteur industriel sont, à titre d'exemple pour le présent mode de réalisation :

- Des données descriptives et quantitatives des sites industriels dans un espace géographique, en utilisant par exemple base de données SIRENE de l'INSEE fournissant la liste des entreprises française, leur adresse postale, leur secteur d'activité NAF2 et le nombre de salarié.
- Des données d'émissions des sites industriels d'un espace géographique défini, en utilisant par exemple la base de données BDREP ;
- Des données dénombrant les salariés sur un secteur d'activité pour une zone géographique définie d'un espace géographique, en utilisant par exemple la base de données FLORES (Fichier Localisé des Rémunérations et de l'Emploi Salarié) fourni par INSEE pour le territoire français ;
- Des données d'émissions totales d'un espace géographique, en utilisant par exemple Ominea pour le territoire français.

On applique les étapes suivantes :

1. On acquiert d'une base de données, ici la base de données SIRENE, la liste des entreprises françaises enregistrées, et leur code NAF2. A partir de ces données, on distingue les entreprises qui déclarent leurs émissions de GES (ici via la base de données BDREP) et celles qui ne déclarent pas d'émissions. Les entreprises qui déclarent leurs émissions permettent de cartographier les émissions en tant que sources ponctuelles.

2. Ensuite, pour chaque secteur du SNAP3 au niveau national, on applique des étapes de :

    a. Calcul des émissions nationales totales ;
    b. Calcul de la somme des émissions déclarées (sources ponctuelles). Cette étape comprend ici la transformation des secteurs NAF2 en secteurs SNAP3.

3. Pour chaque secteur du SNAP3 au niveau national, la différence entre les émissions nationales totales et les émissions déclarées fournit les émissions restantes théoriques à répartir entre les sites industriels restants. On distingue deux cas :

    a. Il existe un reste d'émissions (2a -2b >0). Les émissions restantes pour un secteur SNAP3 sont réparties entre les sites industriels au prorata du nombre d'employé.
    b. Il n'existe pas de reste d'émissions (2a - 2b<0) : l'étape 3 n'est pas mise en œuvre.

4. Au moment de l'exportation, on met en œuvre une étape d'étalonnage par rapport aux valeurs d'émission de référence de CITEPA.

Le résultat de ces étapes est représenté sous forme de carte des émissions de GES pour le secteur industriel pour la dernière année de données disponibles (A-2) avec une précision à l'échelle du site industriel individuel.

Les principales données collectées pour la temporalisation des émissions relatives au secteur industriel sont, dans le présent mode de réalisation :

- Des données d'émissions totales sur un espace géographique pour le secteur industriel par source d'énergie et par sous-secteur d'activités (NAF2, SNAP3 ou toute autre nomenclature permettant la classification des activités liées au secteur industriel), par exemple les données fournies par Ominea pour le territoire français ;
- Des données de consommation de gaz dans un espace géographique sur une période définie, en utilisant par exemple la base de données GRTgaz pour le territoire français ;
- Des séries temporelles pour chaque sous-secteur d'activité, en utilisant par exemple la base de données INERIS ;

A partir des données récoltées on applique les étapes suivantes :

1. Pour chaque secteur du SNAP3, on collecte leur consommation d'énergie et on distingue le gaz par rapport aux autres énergies.
2. Pour chaque secteur de SNAP3 :

    c. On calcule les émissions horaires associées au gaz ;
    d. On calcule les émissions horaires associées aux sources d'énergie autres que le gaz à partir des émissions annuelles, en utilisant des séries temporelles théoriques du SNAP3, par exemple en utilisant la base de données INERIS ;

3. On additionne les résultats de l'étape précédente pour obtenir les émissions horaires de chaque secteur SNAP3 dans le secteur industriel.

On obtient ainsi une carte des émissions horaires de GES pour les activités du secteur industriel.
Pour le secteur de l'énergie :
La spatialisation des émissions liées au secteur énergétique suit les mêmes étapes que celles du secteur énergétique. Les différentes données collectées pour le secteur industriel sont réutilisées pour le secteur énergétique.
En outre, pour le présent mode de réalisation, on collecte également les données suivantes :

- Des données d'inventaire et de spatialisation de sites relatifs au secteur énergétique (par exemple les centrales thermiques) sur un espace géographique.
On peut par exemple utiliser les données fournies par Wikipédia (liste des centrales thermiques de France) associées aux données fournies par BD Topo de IGN décrivant l'emplacement desdites centrales thermiques ;

A partir des données récoltées, on applique les étapes suivantes :

1. Calcul des émissions associées aux centrales thermiques :

    e. Association de chaque centrale thermique à son code de construction et à son code SIRET.
    f. Calcul des émissions pour l'année A-2 (via BDREP par exemple) de la même manière que pour le secteur industriel.
    g. Définition de l'emplacement de la centrale thermique par le code de construction. (via BD Topo par exemple)

2. Calcul des émissions associées aux réseaux de chaleur en suivant les mêmes étapes que pour le secteur industriel. Les émissions sont déclarées dans la BDREP pour le territoire français.

3. Addition des émissions des centrales thermiques et des chaudières des réseaux de chaleur pour obtenir les émissions totales du secteur de l'énergie.

On obtient ainsi une carte des émissions de GES pour le secteur des énergies au niveau du site de production d'énergie A-2.

Les données collectées pour la temporalisation du secteur énergétique sont, à titre d'exemple pour le présent mode de réalisation :

- Les mêmes données que celles utilisées pour la temporalisation du secteur industriel ; et
- Des données de production d'électricité sur une période donnée (par exemple en temps réel) sur une zone géographique définie d'un espace géographique, en utilisant par exemple la base de données eco2mix fournie par RTE.

A partir des données récoltées, on applique les étapes suivantes :

1. Réduction de l'échelle des émissions des centrales thermiques de l'annuel à l'horaire.

2. Réduction des émissions des réseaux de chaleur de l'année à l'heure - ceci est fait en utilisant les profils temporels théoriques de l'INERIS (Institut national de l'environnement industriel et des risques).

3. Addition des émissions horaires des centrales thermiques et des chaudières des réseaux de chaleur pour obtenir les émissions horaires totales du secteur de l'énergie.

Pour les déchets :

Les étapes de la spatialisation des émissions de GES pour le secteur des déchets sont les mêmes que celles du secteur industriel.

De même, les étapes de la temporalisation des émissions de GES pour le secteur déchets sont les mêmes que celles du secteur industriel. La temporalisation s'appuie sur les profils temporels théoriques de l'INERIS.

Pour le secteur résidentiel :

Le résultat de cette étape est une carte de la consommation d'énergie (kWh) du secteur résidentiel, spatialisée jusqu'à chaque îlot IRIS, pour la dernière année pour laquelle des données d'entrée sont disponibles (A-4, 2018 dans notre exemple).

Les émissions sont calculées en distinguant les usages suivants :

- Système de chauffage primaire
- Eau chaude pour usage sanitaire
- Cuisine
- Consommation d'électricité spécifique (par exemple, électricité due à la climatisation, à la télévision, à la machine à laver, etc)

Les émissions résidentielles sont calculées en décomposant les contributions des multiples sources d'énergie comme suit :

- Combustible domestique
- Gaz naturel
- Gaz de pétrole liquéfié
- Bois
- Charbon

Les principales données collectées pour la spatialisation du secteur résidentiel sont, à titre d'exemple pour le présent mode de réalisation :

- Des données relatives au nombre de logement et à leurs caractéristiques dans une zone géographique définie d'un espace géographique, par exemple le jeu de données Détails Logement de l'INSEE fournissant des informations à l'échelle de l'îlot IRIS pour le territoire français ;

- Des données quantifiant les besoins de consommation des logements dans une zone géographique définie d'un espace géographique en fonction des caractéristiques des logements, par exemple les données fournies par l'ADEME ;
- Des données d'inventaires de bâtiments d'un espace géographique et leurs caractéristiques (surface, consommation totale d'énergie), par exemple en utilisant la base de données CEREN ;
- Des données météorologiques dans un espace géographique, par exemple les données fournies par Météo France ;

La spatialisation des émissions résidentielles comprend 6 étapes principales.

**Étape 1.** Description des logements pour chaque zone géographique, ici chaque îlot IRIS.

On distingue chaque logement de chaque îlot IRIS de manière unique selon les caractéristiques suivantes :

- Nombre de logement (poids) par îlot IRIS ;
- Date de construction du logement ;
- Nombre de locataires par logement ;
- Source d'énergie principale ;
- Type de logement (appartement ou maison) ;
- Catégorie de logement (principal, secondaire, vacant) ;
- Surface du logement.

La description des logements pour chaque îlot IRIS est fournie par Détail Logement et est ensuite vérifiée et/ou corrigée à partir des données relatives aux réseaux de chauffage (PCIT) et de gaz, ainsi qu'à partir des données CEREN.

**Étape 2.** Calcul des coefficients représentatifs des demandes de consommation par unité d'habitation pour les 4 usages susmentionnés (chauffage, eau chaude sanitaire, cuisine et consommation d'électricité spécifique).

Une unité d'habitation est un logement divisé par sa surface (en m$^2$) ou par son nombre de locataires. L'ADEME fournit des estimations de la demande de consommation pour une unité d'habitation, appelées coefficients. Ces coefficients dépendent des caractéristiques définissant chaque logement.

Les coefficients pour chaque usage sont définis comme suit :

$$coef_{chauffage} = f(principale\ source\ d'énergie, type, date\ de\ construction, taux\ d'occupation, catégorie)$$

$$coef_{cuisine} = f(principale\ source\ d'énergie, taux\ d'occupation, catégorie)$$

$$coef_{eau\ chaude} = f(principale\ source\ d'énergie, taux\ d'occupation, catégorie)$$

$$coef_{électricité\ spécifique} = f(taux\ d'occupation, catégorie)$$

**Étape 3.** Calcul de l'indice de rigueur climatique pour zone géographique, ici chaque îlot IRIS :

Pour chaque ville, l'indice de rigueur climatique est calculé de la manière suivante :

Indice de rigueur climatique par ville = degré-jour annuel / degré-jour moyen national

Le degré-jour annuel est calculé (pour l'année 2018 dans notre exemple) à partir des températures quotidiennes de la ville.

Le degré-jour moyen national est calculé (pour l'année 2018 dans notre exemple) en réalisant la moyenne des valeurs de degré-jour par ville, sur toutes les villes du territoire.

L'indice de rigueur climatique au niveau de l'îlot IRIS est alors défini comme l'indice de rigueur climatique de la ville où il se trouve.

Cet indice de rigueur climatique est utilisé dans les calculs ultérieurs pour tenir compte de l'impact de la variabilité météorologique à travers le pays sur les besoins de consommation de chauffage.

**Étape 4.** Calcul de la demande de consommation par logement et par usage.

A l'aide des résultats des étapes 1 et 2, de la surface du logement et du nombre de locataires (tenants), on calcule pour chaque logement par usage :

$$Conso.\,chauffage = surface \times coef_{chauffage} \times indice_{climatique}$$

$$Conso.\,cuisine = coef_{cuisine}$$

$$Conso.\,eau\,chaude = nombre\,de\,locataires \times coef_{eau\,chaude}$$

*Conso. énergie spécifique = moyenne nationale conso. par logement*

**Étape 5.** Calcul de la demande de consommation par îlot IRIS.

La demande de consommation totale par usage par îlot IRIS est ainsi obtenue par (« poids » représente le nombre de logements par îlot IRIS, i représente la combinaison unique des caractéristiques de chaque logement de l'îlot IRIS)

$$Consommation\,chauffage^{IRIS} = \sum_{i} poids_i \times Conso.\,chauffage_i$$

$$Consommation\,cuisine^{IRIS} = \sum_{i} poids_i \times Conso.\,cuisine_i$$

$$Consommation\,eau\,chaude^{IRIS} = \sum_{i} poids_i \times Conso.\,eau\,chaude_i$$

$$Consommation\,énergie\,spécifique^{IRIS}$$
$$= \sum_{i} poids_i \times Conso.\,énergie\,spécifique_i$$

**Étape 6.** Etalonnage des valeurs obtenues par rapport aux consommations relevées par le CEREN.

Le résultat de ces 6 étapes est le besoin en consommation d'énergie de chaque IRIS pour l'année 2018, en kWh. Ces besoins de consommation sont calculés pour une année de référence (2018) et doivent être ajustés en fonction des variations locales du climat d'une année sur l'autre. Cet ajustement sera réalisé au cours de l'étape de temporalisation.

L'étape de temporisation consiste à extrapoler la consommation énergétique résidentielle, en kWh, de l'année de référence, en temps réel.

Les principales données collectées pour temporaliser le secteur résidentiel sont, à titre d'exemple pour le présent mode de réalisation :

- Des données météorologiques ou relatives à des températures, par exemple des températures horaires fournies par MétéoFrance ou les valeurs annuelles des degrés-jours au niveau départemental fourni par le Ministère de la transition énergétique ;
- Des séries temporelles quantifiant sur une période les besoins en consommation d'énergie liés au secteur résidentiel, par exemple des séries temporelles théoriques fournies par INERIS.

Le degré-jour est une valeur représentative de l'écart entre la température d'une journée donnée et un seuil de température préétabli.

On applique ensuite les étapes ci-dessous pour temporaliser les émissions liées au secteur résidentiel.

1. Calcul des consommations annuelles par îlot IRIS en tenant compte des variations météorologiques. Pour ce faire, on utilise le degré-jour (DJ) annuel au niveau départemental fourni par le Ministère de la transition énergétique, pour toutes les années A entre 1970 et 2021, comme suit :

$$Consommation\ chauffage_{année\ A}^{IRIS}$$

$$= \frac{DJ_{année\ A}^{department}}{DJ_{2018}^{department}}\ Consommation\ chauffage_{2018}^{IRIS}$$

Seul le besoin de chauffage est modulé car il est supposé être le seul usage sensible au climat. Les demandes de consommation relatives aux autres usages, c'est-à-dire à la cuisine, à l'eau chaude sanitaire et à l'électricité spécifique, ne sont pas ajustées en fonction du climat.

2. Réduction de l'échelle temporelle de l'année à l'heure :

a. Tout d'abord, les besoins en consommation de chauffage sont ajustés quotidiennement en fonction de la température extérieure. L'écart entre le climat normal et le climat réel est mesuré par un degré-jour, calculé à partir des températures de surface quotidiennes. Par approximation, le degré-jour de chaque îlot IRIS est considéré comme celui de la station MétéoFrance la plus proche. Le calcul est basé sur une température intérieure de référence de 18°C lorsque le logement est occupé, 15°C dans le cas contraire, l'occupation du logement étant déterminée sur la base du profil théorique journalier de chauffage de l'INERIS.

b. Ensuite, les séries temporelles sont utilisées pour réduire l'échelle en fonction de l'usage :

- Pour le chauffage : les résultats de l'étape précédente sont utilisés pour réduire les besoins de consommation pour le chauffage de l'annuel au quotidien, puis le profil horaire théorique de l'INERIS est utilisé pour passer d'une échelle quotidienne à une échelle horaire.
- Pour les autres usages, seuls les profils temporels théoriques de l'INERIS sont utilisés pour le changement d'échelle temporelle.

3. Vérification des valeurs obtenues, par étalonnage par rapport aux émissions du CITEPA.

4. Dans certains cas, une étape supplémentaire de contrôle de la qualité des données peut avoir lieu tenant compte de la distribution spatiale de la population au sein d'un IRIS en utilisant les données de l'Agence Européenne de l'Environnement.

Pour le secteur tertiaire :

Les émissions tertiaires consistent en la somme des émissions liées à l'utilisation des bâtiments et des émissions liées à l'activité économique relevant du secteur tertiaire.

Le calcul des émissions du secteur tertiaire s'appuie sur les notions de branches tertiaires et de mix énergétique tertiaire.

Les branches tertiaires sont les 8 sous-activités suivantes du secteur tertiaire : bureaux, commerces, enseignement, hôpitaux et action sociale, logements collectifs, cafés/restaurants/hôtels, bâtiments de transport, activités sportives et culturelles.

Le mix énergétique tertiaire fait référence aux 4 types d'énergies suivants : gaz, combustible fossile, électricité, autre combustible (bois, charbon, autre).

L'étape de spatialisation consiste à calculer les émissions tertiaires par îlot IRIS et par type d'énergie pour la dernière année de données disponibles (A-2 par exemple) pour chaque type d'émission liées au secteur tertiaire (utilisation des bâtiments et activité économique).

Les principales données collectées pour la spatialisation du secteur tertiaire sont, à titre d'exemple pour le présent mode de réalisation :

- Des données relatives à la consommation d'énergie pour le secteur tertiaire dans un espace géographique, par exemple en utilisant le jeu de données fourni par CEREN ;
- Des données recensant le nombre de personnes liées au secteur tertiaire (élèves, salariés du secteur tertiaire) dans une zone géographique définie d'un espace géographique, par exemple les données fournies par l'Education Nationale ou par la base de données FLORES ;
- Des données relatives à la consommation d'électricité au sein d'une zone géographique d'un espace géographique sur une période définie, par exemple en collectant les données fournies par RTE (consommation d'électricité pour chaque îlot IRIS et pour une année donnée) ;
- Des données relatives à la spatialisation des émissions liées à l'activité économique, de la même manière que pour le secteur industriel (par exemple, SIRENE, BDREP, FLORES et Ominea).

Les étapes permettant d'obtenir les émissions tertiaires dues à l'utilisation des bâtiments sont les suivantes :

1. Pour chaque ville, on collecte le nombre de personnes par branche tertiaire (nombre d'élèves et nombre d'employés).
2. Pour chaque ville, on calcule la consommation d'énergie (kWh) par usage (chauffage, eau chaude, cuisine, électricité spécifique).

    a. On calcule une moyenne nationale de la consommation d'énergie par personne, par branche et par usage
    b. On multiplie ensuite la moyenne obtenue par le nombre de personnes. Pour le chauffage, il faut multiplier la consommation d'énergie par l'indice de rigueur climatique.

3. On redéfinit l'échelle des consommations de la ville à l'îlot IRIS afin d'obtenir la consommation d'énergie (kWh), par îlot IRIS et par usage.
4. On calcule les émissions à l'échelle de la ville :

    a. On répartit la consommation d'énergie au niveau de la ville par type d'énergie à partir du mix énergétique du secteur résidentiel au niveau IRIS.
    b. Pour chaque type d'énergie, on multiplie la consommation d'énergie au niveau de la ville par le facteur d'émission associé du CITEPA.

5. Etape de contrôle de la qualité des données obtenues : vérification de la consommation nationale d'énergie par type d'énergie tertiaire.

    a. sur la base des valeurs nationales publiées par le CEREN
    b. sur la base des émissions nationales totales publiées par le CITEPA

Les étapes permettant de spatialiser les émissions tertiaires dues à l'activité économique tertiaire sont les mêmes que celles décrites pour le secteur industriel. Les activités tertiaires sont sectorisées par sous-secteurs par exemple SNAP3.

On obtient ainsi une carte des émissions de GES relatives au secteur tertiaire par addition des émissions dues à l'utilisation des bâtiments et des émissions dues aux activités économiques tertiaires.

La temporalisation des émissions du secteur tertiaire se fait selon deux branches :

- l'une excluant les bâtiments : la même méthodologie de temporalisation que pour le secteur industriel est appliquée.
- l'autre pour les bâtiments tertiaires : la même méthodologie de temporalisation que pour le secteur résidentiel est appliquée.

Pour le secteur des transports routiers :

Les principales données collectées pour spatialiser les émissions liées au secteur des transports sont, à titre d'exemple pour le présent mode de réalisation :

- Des données topologiques relatives à la géométrie d'une route au sein d'un espace géographique, par exemple les données provenant de la base de données BD Topo, fournie par l'IGN ;
- Des données de quantification du trafic, fournies par exemple par les DIR (Directions des Infrastructures Routières) au niveau départemental ;
- Des données relatives à la consommation de carburant sur une période donnée dans une zone géographique définie d'un espace géographique, par exemple les données fournies par le Ministère de la Transition écologique et de la Cohésion des territoires recensant les ventes annuelles de carburant par département ;
- Des données relatives aux déplacements des personnes dans une zone géographique définie d'un espace géographique, par exemple les données fournies par EMD (Enquêtes Ménages Déplacement) ;
- Des données relatives à l'utilisation des sols, par exemple les données fournies par CORINE Land Cover ;

L'étape de spatialisation pour le secteur des transports routiers comprend 7 étapes principales.

**Etape 1.** Homogénéisation des données de trafic routier.

En France, le comptage du trafic est estimé par deux technologies : les boucles magnétiques et les plaques de pression. Ces dispositifs sont placés sur des segments de route où le trafic est important. Ils détectent trois types de véhicules : les véhicules légers (les voitures), les véhicules lourds (les bus, les camions) et les véhicules à deux roues. Sur l'ensemble de la France métropolitaine, on compte plus de 8800 points de mesure, chacun sur un segment de route, sur environ 1,1 million de segments de route. Les administrations publiques locales supervisent ces opérations, mais les données mesurées ne sont pas nécessairement publiées ou facilement accessibles.

Cette étape d'homogénéisation des données de trafic collectées est nécessaire car le format de la sortie des comptages de trafic routier mesuré est hétérogène (par exemple, le comptage est effectué à des fréquences distinctes) ce qui complique l'exploitation des données. On homogénéise donc les données selon une unité temporelle commune.

**Etape 2.** Classification des segments de route en fonction des données de comptage du trafic disponibles.

Un axe routier comprend plusieurs segments de route. Les données de comptage de trafic peuvent être obtenues pour un segment de route ou pour un axe routier en fonction de la localisation des dispositifs de comptage.

Les segments de route sont répartis en quatre catégories :

- Segments primaires : segments de route avec données de comptage du trafic disponible.
- Segments secondaires : segments de route correspondant à des extensions des segments primaires de moins de 10km.
- Segments tertiaires : segments de route n'entrant pas dans les catégories précédentes mais pour lesquels l'axe routier est associé à au moins un comptage de trafic.
- Segment quaternaire : segments de route n'entrant dans aucune catégorie précédente.

**Etape 3.** Répartition du trafic sur le réseau routier (en excluant les agglomérations).

1. Les segments primaires sont mesurés.
2. Les segments secondaires héritent du segment de route respectif dont ils dérivent.
3. Les segments tertiaires reçoivent l'activité moyenne du trafic le long de l'axe routier : un axe peut avoir plusieurs segments routiers avec des données de comptage de trafic disponibles.
4. Les segments quaternaires font l'objet d'un calcul avancé, détaillé à l'étape 5.

**Etape 4.** Distribution du trafic dans les agglomérations.

Dans les agglomérations soumises aux données EMD, chaque îlot IRIS se voit attribuer une valeur indiquant la distance des trajets parcourus par les habitants, calculée en multipliant la population résidentielle de l'IRIS par la distance moyenne des trajets quotidiens par habitant. Les véhicules.km sont ensuite répartis proportionnellement au nombre de voies de chaque segment routier de l'IRIS. Ces calculs sont effectués séparément pour chaque type de véhicule (véhicules légers, véhicules lourds, deux roues).

**Etape 5.** Distribution du trafic sur les segments de routes quaternaires.

Les axes départementaux sont regroupés dans leur importance de segment respective pour extraire leur fréquence moyenne : le nombre moyen de kilomètres parcourus par jour par habitant pour chaque classe d'importance de segment. Enfin, chaque classe d'importance de segment donne une valeur, qui est multipliée par le nombre d'habitants de chaque département. Le résultat est donc pour chaque département, et pour chaque classe d'importance de segment, une moyenne annuelle du trafic journalier.

Un seuil minimal est fixé pour assurer une activité minimale pour chaque axe, soit 10 véhicules par jour pour le type léger, 0,15 véhicule par jour pour le type lourd, et 0,25 véhicule par jour pour le type deux roues.

**Etape 6.** Vérification basée sur les ventes de carburant :

On calcule l'activité totale du trafic par département :

$$flotte\ de\ véhicule_{department}$$
$$= \frac{flotte\ de\ véhicule_{national} \times ventes\ de\ carburant_{department}}{ventes\ de\ carburant_{national}}$$

Où la flotte de véhicules est donnée en véhicule.km, et la vente de carburant est donnée en litres. Les ventes de carburant sont obtenues pour l'année A-1 via le CITEPA.

La flotte de véhicule est ensuite répartie pour chaque îlot IRIS, proportionnellement à la population dudit IRIS afin de calculer le nombre de kilomètres parcourus annuellement sur les réseaux de transports routiers pour chaque IRIS :

$$flotte\ de\ véhicule_{IRIS} = \frac{flotte\ de\ véhicule_{department} \times population\ 2012_{IRIS}}{population\ 2012_{department}}$$

Etape 7. Etalonnage par rapport aux données de trafic du CITEPA.

On obtient ainsi une carte de la moyenne quotidienne du trafic pour chaque segment de route à l'année A-2.

On réalise à présent l'étape de temporalisation du secteur des transports routiers. Pour cela, on collecte les données suivantes, à titre d'exemple pour le présent mode de réalisation :

- Des séries temporelles relatives à l'utilisation des routes sur une période définie (par exemple une heure), par exemple les données fournies par INERIS
- Des données relatives à la mobilité sur une période donnée (par exemple quotidienne) dans un espace géographique, en utilisant par exemple les indicateurs fournis par CEREMA ;

Les étapes de la temporalisation du secteur routier sont les suivantes : (collectant des données à partir de bases de données utilisées à titre d'exemple, pour le présent mode de réalisation de l'invention) :

1. Calibration de l'indicateur du CEREMA par rapport aux séries temporelles théoriques de l'INERIS.
2. Calcul du nombre de véhicules-kilomètres par jour puis par heure (en utilisant les séries temporelles théoriques de l'INERIS).

Pour les émissions relatives au *scope 2 :*

Les émissions du scope 2 sont calculées pour les secteurs d'activité résidentiels et tertiaires. Elles englobent les émissions liées à la consommation d'électricité et à l'énergie du réseau de chauffage.

L'étape de spatialisation des émissions relatives au scope 2 nécessite notamment les bases de données suivantes :

- Des données relatives à la consommation d'électricité d'une zone géographique définie d'un espace géographique pour une période donnée, par exemple le jeu de données fourni par RTE ;
- Des données relatives à l'énergie délivrée par les réseaux de chaleur dans une zone géographique définie d'un espace géographique, par exemple les données fournies par le Ministère de l'environnement.

Par combinaison des différentes données provenant de ces sources, on obtient par exemple, une carte des consommations énergétique de chaque îlot IRIS pour l'année recherchée par secteur d'activité (résidentiel et tertiaire) et par source d'énergie (électricité ou réseau de chaleur).

La conversion de la consommation d'énergie en émissions de GES se fait à l'étape de temporalisation.

Les données collectées pour procéder à l'étape de temporalisation des émissions du scope 2 sont, à titre d'exemple pour le présent mode de réalisation :

- Des données relatives à la consommation d'électricité sur une période donnée (par exemple en temps réel) dans un espace géographique, par exemple les données fournies par eco2mix ;
- Des données relatives à l'intensité carbone de la production d'électricité, fournies par exemple par eco2mix ;
- Des données quantifiant les émissions par réseau de chaleur, par exemple les facteurs d'émissions fournis par Ministère français de l'environnement ;
- Des données météorologiques, en utilisant par exemple MétéoFrance qui fournit des températures horaires.

On met en œuvre les étapes de calcul suivantes :

1. Pour chaque secteur d'activité (i.e. résidentiel et tertiaire) et pour chaque heure, on calcule la consommation d'énergie (en MWh) par source d'énergie (i.e. électricité et réseau de chaleur), par îlot IRIS.
2. Pour chaque secteur d'activité et pour chaque heure, on calcule les émissions scope 2 correspondantes.

On obtient par exemple les émissions scopes 2 par secteur, par îlot IRIS et par heure.

Une fois toutes ces étapes réalisées, par secteur d'activité réalisées, on obtient un nombre fini d'inventaires spatialisés et temporalisés des émissions de gaz à effet de serre.

Tous ces inventaires sont ainsi combinés afin de générer un unique inventaire permettant d'obtenir les émissions de GES pour n'importe quelle heure, objet spatial ou secteur SNAP3.

Le principal format de sortie de cet inventaire est une carte spatialisant l'intensité des émissions de GES à un instant t défini.

Il est également possible d'envisager un format tabulaire.

**Revendications**

**1.** Procédé (1) de génération d'inventaires d'émissions de gaz à effet de serre issues d'activités anthropiques et/ou biogéniques, lesdites activités étant classées par secteurs d'activités, le procédé étant mis en œuvre par ordinateur et étant **caractérisé en ce qu'**il comprend, pour chaque secteur d'activité parmi une activité du secteur industriel, une activité du secteur résidentiel, une activité du secteur tertiaire, une activité du secteur énergétique, une activité du secteur des déchets, une activité du secteur des transports routiers, une activité du secteur des transports non routiers, une activité du secteur agricole, et une activité liée aux émissions de gaz à effet de serre indirectes, des étapes de :

• Collecte (10) de données descriptives et quantitatives relatives à des activités émettrices de gaz à effet de serre à partir d'une pluralité de bases de données, lesdites données collectées comprenant au moins des données d'activité en temps réel et/ou des données d'émissions et/ou des données de séries temporelles ;

• Spatialisation (11) à l'échelle de l'ordre du bâtiment des émissions de gaz à effet de serre dudit secteur d'activité dans un espace géographique, par la combinaison desdites données collectées ;

• Temporalisation (12) à l'échelle horaire des émissions de gaz à effet de serre dudit secteur d'activité par la combinaison desdites données collectées et des résultats de l'étape de spatialisation de sorte à obtenir au moins une valeur représentative des émissions de gaz à effet de serre dudit secteur d'activité, dans une zone géographique définie dudit espace géographique sur une période donnée ;

le procédé comprenant en outre une étape de combinaison (14) des résultats des étapes de spatialisation (11) et de temporalisation (12) de chaque secteur d'activité de sorte à obtenir un inventaire global des émissions de gaz à effet de serre temporalisé et spatialisé, ledit inventaire global prenant le format d'une carte spatialisant l'intensité des émissions de gaz à effet de serre à un instant défini.

**2.** Procédé (1) selon la revendication 1, **caractérisé en ce qu'**il comprend en outre au moins une étape d'étalonnage (13) desdites données obtenues à l'issue des étapes de spatialisation (11) et de temporalisation (12), à partir de de données d'émissions acquises à l'étape de collecte (11).

**3.** Procédé (1) selon l'une quelconque des revendications 1 à 2, **caractérisé en ce que** ladite étape de spatialisation (11) des émissions dues aux activités dudit secteur industriel comprend des étapes de :

- Acquisition de la liste des entreprises d'un espace géographique ;
- Calcul des émissions de gaz à effet de serre totales dans ledit espace géographique sur une année ;
- Calcul de la somme des émissions de gaz à effet de serre déclarées par les entreprises du secteur industriel dudit espace géographique pour chaque sous-secteur dudit secteur industriel sur une année ;
- Calcul de la différence entre les émissions totales et la somme des émissions déclarées ;
- Répartition de ladite différence des émissions entre les sites industriels proportionnellement à au moins une donnée comparative desdits sites industriels ;
- Addition des résultats des étapes précédentes.

**4.** Procédé (1) selon la revendication 3, **caractérisé en ce que** ladite étape de temporalisation (12) des émissions dues aux activités dudit secteur industriel comprend des étapes de :

- Acquisition des consommations d'énergie des activités du secteur industriel ;
- Pour chaque sous-secteur dudit secteur industriel, calcul des émissions horaires associées au gaz et/ou aux autres énergies à partir des émissions annuelles calculées à l'étape de spatialisation des émissions dudit secteur industriel ;
- Addition des résultats de l'étape précédente de sorte à obtenir les émissions horaires de chaque sous-secteur dudit secteur industriel.

**5.** Procédé (1) selon l'une quelconque des revendications 1 à 4, **caractérisé en ce que** ladite étape de spatialisation (11) des activités dudit secteur énergétique comprend des étapes de :

- Calcul des émissions des sites de production d'énergie dans un espace géographique sur une année et définition de l'emplacement desdits sites ;
- Calcul des émissions associées aux réseaux de chaleur sur une année en appliquant lesdites étapes de spatialisation des émissions des activités du secteur industriel ;
- Addition des résultats des étapes précédentes, de sorte à obtenir une carte des émissions de gaz à effet de serre pour le secteur des énergies au niveau du site de production d'énergie sur une année.

**6.** Procédé (1) selon la revendication 5, **caractérisé en ce que** ladite étape de temporalisation (12) des émissions dues aux activités dudit secteur énergétique comprend des étapes de :

- Calcul des émissions horaires desdits sites de production d'énergie ;
- Calcul des émissions horaires desdits réseaux de chaleur ;
- Addition des résultats des étapes précédentes de sorte à obtenir les émissions horaires totales du secteur énergétique.

**7.** Procédé (1) selon l'une quelconque des revendications 1 à 6, **caractérisé en ce que** ladite étape de spatialisation (11) des émissions dues aux activités du secteur des déchets comprend lesdites étapes de spatialisation des émissions dues aux activités du secteur industriel ; et
ladite étape de temporalisation (12) des activités du secteur des déchets comprend lesdites étapes de temporalisation des émissions dues aux activités du secteur industriel.

**8.** Procédé (1) selon les revendications 1 à 7, lesdites émissions de gaz à effet de serre étant distinguées par leur usage, chaque logement dudit secteur résidentiel d'une zone géographique définie de l'espace géographique comprenant au moins une unité d'habitation et étant défini par une combinaison de caractéristiques qui lui sont propres ; **caractérisé en ce que** ladite étape de spatialisation (11) des émissions dues aux activités dudit secteur résidentiel comprend des étapes de :

- Acquisition des caractéristiques des logements pour chaque zone géographique définie de l'espace géographique ;
- Calcul de coefficients représentatifs des demandes de consommation pour chaque unité d'habitation et pour chaque usage;
- Calcul d'un indice représentant l'impact des variations météorologiques pour chaque zone géographique définie de l'espace géographique ;
- Calcul de la demande de consommation par logement et par usage pour chaque zone géographique définie de l'espace géographique.

**9.** Procédé (1) selon la revendication 8, **caractérisé en ce que** ladite étape de temporalisation (12) des émissions dues aux activités dudit secteur résidentiel comprend des étapes de :

- Calcul des consommations d'énergie annuelles dudit secteur énergétique pour chaque zone géographique définie de l'espace géographique ;
- Extrapolation de la consommation de chauffage sur une période donnée en fonction de données météorologiques ;
- Calcul des émissions horaires pour chaque usage ;
- Addition des résultats de l'étape précédente de sorte à obtenir les émissions horaires totales des activités du secteur résidentiel.

**10.** Procédé selon l'une quelconque des revendications 1 à 9, lesdites émissions de gaz à effet de serre étant distinguées par leur usage, **caractérisé en ce que** ladite étape de spatialisation (11) des émissions dues aux activités dudit secteur tertiaires comprend :

- La spatialisation des émissions dues aux activités économiques tertiaires, par application desdites étapes de spatialisation des émissions dues aux activités du secteur industriel ;
- La spatialisation des émissions dues aux bâtiments appartenant audit secteur tertiaire, comprenant les étapes de :

• Calcul de la consommation d'énergie totale par usage dans l'espace géographique ;

• Calcul de la consommation d'énergie totale par usage pour chaque zone géographique définie de l'espace géographique ;

• Calcul des émissions de gaz à effet de serre pour chaque zone géographique définie de l'espace géographique.

11. Procédé selon les revendications 4 et 9, **caractérisé en ce que** ladite étape de temporalisation (12) des émissions dues aux activités dudit secteur tertiaire comprend des étapes de :

- Temporalisation des émissions de gaz à effet de serre excluant les émissions dues aux bâtiment du secteur tertiaire en appliquant lesdites étapes de temporalisation des émissions dues aux activités du secteur industriel ;
- Temporalisation des bâtiments du secteur tertiaire en appliquant lesdites étapes de temporalisation des émissions dues aux activités du secteur résidentiel.

12. Procédé selon l'une quelconque des revendications 1 à 11, **caractérisé en ce que** ladite étape de spatialisation (11) des émissions dues aux activités dudit secteur des transports routiers comprend des étapes de :

- Homogénéisation des données de trafic routier ;
- Classification des routes et des segments de route en fonction des données de comptage du trafic ;
- Distribution du trafic sur l'ensemble du réseau routier ;
- Vérification des résultats de répartition du trafic par des calculs sur des données relatives audit trafic..

13. Procédé selon l'une quelconque des revendications 1 à 12, **caractérisé en ce que** ladite étape de temporalisation (12) des émissions dues aux activités dudit secteur des transports routiers comprend des étapes de :

- Extrapolation de données liées à la mobilité sur une période dans un espace géographique de sorte à obtenir des indicateurs de mobilité quotidiens ;
- Calcul du nombre de véhicules par kilomètre par jour ;
- Calcul du nombre de véhicules par kilomètre par heure ;
- A partir des résultats de l'étape précédente, calcul des émissions horaires totales du secteur des transports routiers.

14. Dispositif de génération d'inventaires d'émissions de gaz à effet de serre issues d'activités anthropiques et/ou biogéniques, lesdites activités étant classées par secteurs d'activités, ledit dispositif étant **caractérisé en ce qu'**il comprend, pour chaque secteur d'activité parmi une activité du secteur industriel, une activité du secteur résidentiel, une activité du secteur tertiaire, une activité du secteur énergétique, une activité du secteur des déchets, une activité du secteur des transports routiers, une activité du secteur des transports non routiers, une activité du secteur agricole, et une activité liée aux émissions de gaz à effet de serre indirectes :

• Des moyens de collecte adaptés pour collecter (10) des données descriptives et quantitatives relatives à des activités émettrices de gaz à effet de serre à partir d'une pluralité de bases de données, lesdites données collectées comprenant au moins des données d'activité en temps réel et/ou des données d'émissions et/ou des données de séries temporelles ;

• Des moyens de spatialisation adaptés pour mettre en œuvre des étapes de spatialisation (11) des émissions de gaz à effet de serre dudit secteur d'activité dans un espace géographique, par la combinaison desdites données collectées ;

• Des moyens de temporalisation adaptés pour mettre en œuvre des étapes de temporalisation (12) des émissions de gaz à effet de serre dudit secteur d'activité par la combinaison desdites données collectées et des résultats de l'étape de spatialisation de sorte à obtenir au moins une valeur représentative des émissions de gaz à effet de serre dudit secteur d'activité, dans une zone géographique définie dudit espace géographique sur une période donnée ;

le dispositif comprenant en outre des moyens de combinaison (14) adaptés pour combiner des résultats des étapes de spatialisation (11) et de temporalisation (12) de chaque secteur d'activité de sorte à obtenir un inventaire global des émissions de gaz à effet de serre temporalisé et spatialisé, ledit inventaire global prenant le format d'une carte spatialisant l'intensité des émissions de gaz à effet de serre à un instant défini.

**Patentansprüche**

1. Verfahren (1) zur Erstellung von Treibhausgasemissioninventaren aus anthropogenen und/oder biogenen Aktivitäten, wobei die Aktivitäten in Aktivitätssektoren untergeteilt sind, wobei das Verfahren computergestützt durchgeführt wird und **dadurch gekennzeichnet ist, dass** es für jeden Aktivitätssektor unter einer Aktivität des Industriesektors, einer Aktivität des Wohnsektors, einer Aktivität des Dienstleistungssektors, einer Aktivität des Energiesektors, einer Aktivität des Abfallsektors, einer Aktivität des Straßentransportsektors, einer Aktivität des nicht straßengebundenen Transportsektors, einer Aktivität des Landwirtschaftssektors und einer Aktivität, die mit indirekten Treibhausgasemissionen in Verbindung steht, die folgenden Schritte umfasst:

   • Sammeln (10) von beschreibenden und quantitativen Daten in Bezug auf Aktivitäten, die Treibhausgase emittieren, aus einer Vielzahl von Datenbanken, wobei die gesammelten Daten zumindest Echtzeit-Aktivitätsdaten und/oder Emissionsdaten und/oder Zeitreihendaten umfassen;
   • Verräumlichung (11) auf der Ebene der Gebäudeordnung der Treibhausgasemissionen des Sektors in einem geografischen Raum durch die Kombination der gesammelten Daten;
   • Verzeitlichung (12) der Treibhausgasemissionen des Sektors durch die Kombination der gesammelten Daten und der Resultate des Verräumlichungsschritts, um mindestens einen Wert zu erlangen, der repräsentativ für die Treibhausgasemissionen des Sektors in einem definierten geografischen Gebiet des geografischen Raums über einen bestimmten Zeitraum ist;

   das Verfahren ferner umfassend einen Schritt eines Kombinierens (14) der Resultate der Schritte der Verräumlichung (11) und der Verzeitlichung (12) von jedem Aktivitätssektor, um ein verzeitlichtes und verräumlichtes Gesamtinventar der Treibhausgasemissionen zu erlangen, wobei das Gesamtinventar das Format einer Karte annimmt, die die Intensität der Treibhausgasemissionen zu einem definierten Zeitpunkt verräumlicht.

2. Verfahren (1) nach Anspruch 1, **dadurch gekennzeichnet, dass** es ferner mindestens einen Schritt der Kalibrierung (13) der am Ende der Schritte der Verräumlichung (11) und der Verzeitlichung (12) erlangten Daten anhand von Emissionsdaten umfasst, die bei dem Schritt des Sammelns (11) erfasst werden.

3. Verfahren (1) nach einem der Ansprüche 1 bis 2, **dadurch gekennzeichnet, dass** der Schritt der Verräumlichung (11) der Emissionen aus den Aktivitäten des Industriesektors die folgenden Schritte umfasst:

   - Erfassen einer Liste von Unternehmen in einem geografischen Raum;
   - Berechnen der gesamten Treibhausgasemissionen in dem geografischen Raum über ein Jahr;
   - Berechnen der Summe der Treibhausgasemissionen, die von den Unternehmen des Industriesektors in dem geografischen Gebiet für jeden Teilsektor des Industriesektors in einem Jahr gemeldet werden;
   - Berechnen der Differenz zwischen den Gesamtemissionen und der Summe der gemeldeten Emissionen;
   - Verteilen der Emissionsdifferenz zwischen den Industriestandorten proportional zu mindestens einem Vergleichswert der Industriestandorte;
   - Addieren der Resultate der vorherigen Schritte.

4. Verfahren (1) nach Anspruch 3, **dadurch gekennzeichnet, dass** der Schritt des Verzeitlichens (12) der Emissionen aus den Aktivitäten des Industriesektors die folgenden Schritte umfasst:

   - Erfassen des Energieverbrauchs von Aktivitäten des Industriesektors;
   - für jeden Teilsektor des Industriesektors, Berechnen der stündlichen Emissionen, die mit Gas und/oder anderen Energieträgern assoziiert sind, anhand der jährlichen Emissionen, die in dem Schritt der Verräumlichung der Emissionen des Industriesektors berechnet werden;
   - Addieren der Resultate des vorherigen Schritts, um die stündlichen Emissionen von jedem Teilsektor des Industriesektors zu erlangen.

5. Verfahren (1) nach einem der Ansprüche 1 bis 4, **dadurch gekennzeichnet, dass** der Schritt der Verräumlichung (11) der Aktivitäten des Energiesektors die folgenden Schritte umfasst:

   - Berechnen der Emissionen von Energieerzeugungsstandorten in einem geografischen Gebiet über ein Jahr und Definieren der Lage dieser Standorte;
   - Berechnen der mit Wärmenetzen verbundenen Emissionen für ein Jahr durch Anwenden der Schritte zur räumlichen Erfassung der Emissionen aus Industrieaktivitäten;

- Addieren der Resultate der vorherigen Schritte, um eine Karte der Treibhausgasemissionen für den Energiesektor auf Ebene des Energieerzeugungsstandorts für ein Jahr zu erlangen.

6. Verfahren (1) nach Anspruch 5, **dadurch gekennzeichnet, dass** der Schritt einer Verzeitlichung (12) der Emissionen aus den Aktivitäten des Energiesektors die folgenden Schritte umfasst:

- Berechnen der stündlichen Emissionen der Energieerzeugungsstandorte;
- Berechnen der stündlichen Emissionen der Wärmenetze;
- Addieren der Resultate aus den vorherigen Schritten, um die gesamten stündlichen Emissionen des Energiesektors zu erlangen.

7. Verfahren (1) nach einem der Ansprüche 1 bis 6, **dadurch gekennzeichnet, dass** der Schritt der Verräumlichung (11) von Emissionen aus Aktivitäten des Abfallsektors die Schritte einer Verräumlichung von Emissionen aus Aktivitäten des Industriesektors umfasst; und
der Schritt einer Verzeitlichung (12) der Aktivitäten des Abfallsektors die Schritte einer Verzeitlichung der Emissionen aus den Aktivitäten des Industriesektors umfasst.

8. Verfahren (1) nach den Ansprüchen 1 bis 7, wobei die Treibhausgasemissionen nach ihrem Verwendungszweck unterschieden werden, wobei jede Wohnung des Wohnsektors eines definierten geografischen Gebiets des geografischen Raums mindestens eine Wohneinheit umfasst und durch eine Kombination von Merkmalen definiert ist, die ihr eigen sind;
**dadurch gekennzeichnet, dass** der Schritt einer Verräumlichung (11) der Emissionen aus den Aktivitäten des Wohnsektors die folgenden Schritte umfasst:

- Erfassen von Wohnungsmerkmalen für jedes definierte geografische Gebiet des geografischen Raums;
- Berechnen von Koeffizienten, die repräsentativ für die Verbrauchsanforderungen für jede Wohneinheit und jeden Verwendungszweck sind;
- Berechnen eines Index, der die Auswirkungen von meteorologischen Schwankungen für jedes definierte geografische Gebiet in dem geografischen Raum darstellt;
- Berechnen des Verbrauchsbedarfs nach Wohnung und Verwendungszweck für jedes definierte geografische Gebiet des geografischen Raums.

9. Verfahren (1) nach Anspruch 8, **dadurch gekennzeichnet, dass** der Schritt einer Verzeitlichung (12) der Emissionen aus den Aktivitäten des Wohnsektors die folgenden Schritte umfasst:

- Berechnen des jährlichen Energieverbrauchs des Energiesektors für jedes definierte geografische Gebiet des geografischen Raums;
- Extrapolieren des Heizverbrauchs über einen bestimmten Zeitraum basierend auf meteorologischen Daten;
- Berechnen stündlicher Emissionen für jeden Verwendungszweck;
- Addieren der Resultate des vorherigen Schritts, um die gesamten stündlichen Emissionen der Aktivitäten des Wohnsektors zu erlangen.

10. Verfahren nach einem der Ansprüche 1 bis 9, wobei die Treibhausgasemissionen nach ihrer Verwendung unterschieden werden, **dadurch gekennzeichnet, dass** der Schritt einer Verräumlichung (11) der Emissionen aufgrund von Aktivitäten des Dienstleistungssektors Folgendes umfasst:

- Verräumlichen von Emissionen aus Dienstleistungssektoraktivitäten durch Anwenden der Schritte einer Verräumlichung von Emissionen aus Aktivitäten des Industriesektors;
- Verräumlichen von Emissionen aus Gebäuden, die zu dem Dienstleistungssektor gehören, umfassend die Schritte:

• Berechnen des Gesamtenergieverbrauchs nach Verwendungszweck in dem geografischen Raum;
• Berechnen des Gesamtenergieverbrauchs nach Verwendungszweck für jedes definierte geografische Gebiet des geografischen Raums;
• Berechnen der Treibhausgasemissionen für jedes definierte geografische Gebiet des geografischen Raums.

11. Verfahren nach den Ansprüchen 4 und 9, **dadurch gekennzeichnet, dass** der Schritt einer Verzeitlichung (12) der Emissionen aus den Aktivitäten des Dienstleistungssektors die folgenden Schritte umfasst:

- Verzeitlichen der Treibhausgasemissionen unter Ausschluss der Emissionen aus Gebäuden des Dienstleistungssektors durch Anwenden der Schritte einer Verzeitlichung der Emissionen aus Aktivitäten des Industriesektors;
- Verzeitlichen von Gebäuden des Dienstleistungssektors durch Anwenden der Schritte zur Verzeitlichung von Emissionen aus Aktivitäten des Wohnsektors.

12. Verfahren nach einem der Ansprüche 1 bis 11, **dadurch gekennzeichnet, dass** der Schritt einer Verräumlichung (11) der Emissionen aus den Aktivitäten des Straßenverkehrssektors die folgenden Schritte umfasst:

- Homogenisieren von Straßenverkehrsdaten;
- Klassifizieren von Straßen und Straßenabschnitten basierend auf Verkehrszählungsdaten;
- Verteilen des Verkehrs auf das gesamte Straßennetz;
- Verifizieren der Resultate der Verkehrsverteilung durch Berechnungen mit Daten über den Verkehr..

13. Verfahren nach einem der Ansprüche 1 bis 12, **dadurch gekennzeichnet, dass** der Schritt einer Verzeitlichung (12) der Emissionen aus den Aktivitäten des Straßentransportsektors die folgenden Schritte umfasst:

- Extrapolieren von mobilitätsbezogenen Daten über einen Zeitraum in einem geografischen Raum, um tägliche Mobilitätsindikatoren zu erlangen;
- Berechnen der Anzahl der Fahrzeuge pro Kilometer pro Tag;
- Berechnen der Anzahl der Fahrzeuge pro Kilometer pro Stunde;
- Anhand der Resultate des vorherigen Schritts, Berechnen der gesamten stündlichen Emissionen des Straßenverkehrssektors.

14. Vorrichtung zur Erstellung von Treibhausgasemissioninventaren aus anthropogenen und/oder biogenen Aktivitäten, wobei die Aktivitäten in Aktivitätssektorenuntergeteilt sind, wobei die Vorrichtung **dadurch gekennzeichnet ist, dass** sie für jeden Aktivitätssektor unter einer Aktivität des Industriesektors, einer Aktivität des Wohnsektors, einer Aktivität des Dienstleistungssektors, einer Aktivität des Energiesektors, einer Aktivität des Abfallsektors, einer Aktivität des Straßentransportsektors, einer Aktivität des nicht straßengebundenen Transportsektors, einer Aktivität des Landwirtschaftssektors und einer Aktivität, die mit indirekten Treibhausgasemissionen in Verbindung steht, Folgendes umfasst:

• Sammeleinrichtungen, die zum Sammeln (10) von beschreibenden und quantitativen Daten in Bezug auf Aktivitäten, die Treibhausgase emittieren, aus einer Vielzahl von Datenbanken angepasst sind, wobei die gesammelten Daten zumindest Echtzeit-Aktivitätsdaten und/oder Emissionsdaten und/oder Zeitreihendaten umfassen;
• Einrichtungen zur Verräumlichung, die angepasst sind, um Schritte einer Verräumlichung (11) der Treibhausgasemissionen des Aktivitätssektors in einem geografischen Raum durch Kombination der genannten gesammelten Daten zu implementieren;
• Einrichtungen zur Verzeitlichung, die angepasst sind, um Schritte einer Verzeitlichung (12) der Treibhausgasemissionen des Sektors durch die Kombination der gesammelten Daten und der Resultate des Verräumlichungsschritts zu implementieren, um mindestens einen Wert zu erlangen, der repräsentativ für die Treibhausgasemissionen des Sektors in einem definierten geografischen Gebiet des geografischen Raums über einen bestimmten Zeitraum ist;

die Vorrichtung ferner umfassend Kombinationseinrichtungen (14), die angepasst sind, um Resultate der Schritte einer Verräumlichung (11) und Verzeitlichung (12) von jedem Aktivitätssektors zu kombinieren, um ein verzeitlichtes und verräumlichtes Gesamtverzeichnis der Treibhausgasemissionen zu erlangen, wobei das Gesamtverzeichnis das Format einer Karte annimmt, die die Intensität der Treibhausgasemissionen zu einem definierten Zeitpunkt verräumlicht.

**Claims**

1. A method (1) for generating greenhouse gas emissions inventories from anthropogenic and/or biogenic activities, said activities being classified by activity sectors, the method being implemented by computer and being **character-**

EP 4 354 364 B1

**ized in that** it comprises, for each activity sector among an activity in the industrial sector, an activity in the residential sector, an activity in the service sector, an activity in the energy sector, an activity in the waste sector, an activity in the road transport sector, an activity in the non-road transport sector, an activity in the agricultural sector, and an activity related to indirect greenhouse gas emissions, the steps of:

• Collecting (10) descriptive and quantitative data relating to activities emitting greenhouse gases from a plurality of databases, said collected data comprising at least real-time activity data and/or emissions data and/or time series data;
• Spatializing (11) greenhouse gas emissions from said activity sector in a geographical space at a scale approximately equivalent to that of a building, by combining said collected data;
• Temporalizing (12) greenhouse gas emissions from said activity sector at an hourly scale by combining said collected data and results of the spatialization step so as to obtain at least one value representative of greenhouse gas emissions of said activity sector, in a defined geographical area of said geographical space over a given period;

the method further comprising a step of combining (14) the results of the spatialization (11) and temporalization (12) steps of each activity sector so as to obtain a global inventory of temporalized and spatialized greenhouse gas emissions, said global inventory being formatted as a map spatializing the intensity of the greenhouse gas emissions at a defined instant.

2. The method (1) according to claim 1, **characterized in that** it further comprises at least one calibration step (13) of said data obtained at the end of the spatialization (11) and temporalization (12) steps, from emissions data acquired in the collection step (11).

3. The method (1) according to any one of claims 1 to 2, **characterized in that** said spatialization step (11) of emissions due to the activities of said industrial sector comprises steps of:

- Acquiring the list of companies in a geographical area;
- Calculating total greenhouse gas emissions in said geographical area over a year;
- Calculating the sum of greenhouse gas emissions declared by companies in the industrial sector of said geographical area for each sub-sector of said industrial sector over a year;
- Calculating the difference between total emissions and the sum of declared emissions;
- Distributing said difference in emissions between industrial sites in proportion to at least one comparative datum for said industrial sites;
- Adding the results of the previous steps.

4. The method (1) according to claim 3, **characterized in that** said temporalization step (12) of emissions due to the activities of said industrial sector comprises steps of:

- Acquiring energy consumption of activities in the industrial sector;
- For each sub-sector of said industrial sector, calculating hourly emissions associated with gas and/or other energies based on annual emissions calculated in the spatialization step of emissions from said industrial sector;
- Adding the results of the previous step so as to obtain the hourly emissions of each sub-sector of said industrial sector.

5. The method (1) according to any one of claims 1 to 4, **characterized in that** said spatialization step (11) of the activities of said energy sector comprises steps of:

- Calculating emissions from energy production sites in a geographical area over a year and defining the location of said sites;
- Calculating emissions associated with heating networks over a year by applying said spatialization steps of emissions from activities in the industrial sector;
- Adding the results of the previous steps, so as to obtain a map of greenhouse gas emissions for the energy sector at the energy production site over a year.

6. The method (1) according to claim 5, **characterized in that** said temporalization step (12) of emissions due to the activities of said energy sector comprises steps of:

- Calculating hourly emissions from said energy production sites;
- Calculating hourly emissions from said heating networks;
- Adding the results of the previous steps to obtain the total hourly emissions from the energy sector.

7. The method (1) according to any one of claims 1 to 6, **characterized in that** said spatialization step (11) of emissions due to activities in the waste sector comprises said spatializing steps of emissions due to activities in the industrial sector; and
said temporalization step (12) of activities in the waste sector comprises said temporalization steps of emissions due to activities in the industrial sector.

8. The method (1) according to claims 1 to 7, said greenhouse gas emissions being distinguished by their use, each dwelling of said residential sector of a defined geographical area of the geographical space comprising at least one housing unit and being defined by a combination of characteristics specific to it;
**characterized in that** said spatialization step (11) of emissions due to the activities of said residential sector comprises steps of:

- Acquiring characteristics of the dwellings for each defined geographical area of the geographical space;
- Calculating coefficients representative of consumption demands for each housing unit and for each use;
- Calculating an index representing the impact of meteorological variations for each defined geographical area of the geographical space;
- Calculating consumption demand per dwelling and per use for each defined geographical area of the geographical space.

9. The method (1) according to claim 8, **characterized in that** said temporalization step (12) of emissions due to the activities of said residential sector comprises steps of:

- Calculating the annual energy consumption of said energy sector for each defined geographical area of the geographical space;
- Extrapolating the heat consumption over a given period based on meteorological data;
- Calculating hourly emissions for each use;
- Adding the results of the previous step so as to obtain the total hourly emissions from activities in the residential sector.

10. The method according to any one of claims 1 to 9, said greenhouse gas emissions being distinguished by their use, **characterized in that** said spatialization step (11) of emissions due to the activities of said service sector comprises:

- Spatializing emissions due to economic service activities, by applying said spatialization steps of emissions due to activities in the industrial sector;
- Spatializing emissions due to buildings belonging to said service sector, comprising steps of:

  • Calculating total energy consumption per use in the geographical space;
  • Calculating total energy consumption per use for each defined geographical area of the geographical space;
  • Calculating greenhouse gas emissions for each defined geographical area of the geographical space.

11. The method according to claims 4 and 9, **characterized in that** said temporalization step (12) of emissions due to the activities of said service sector comprises steps of:

- Temporalizing greenhouse gas emissions excluding emissions due to buildings in the service sector by applying said temporalization steps of emissions due to activities in the industrial sector;
- Temporalizing buildings in the service sector by applying said temporalization steps of emissions due to activities in the residential sector.

12. The method according to any one of claims 1 to 11, **characterized in that** said spatialization step (11) of emissions due to the activities of said road transport sector comprises steps of:

- Homogenizing road traffic data;
- Classifying roads and road segments based on traffic count data;

- Distributing traffic across the entire road network;
- Verifying traffic distribution results by calculations on data relating to said traffic..

13. The method according to any one of claims 1 to 12, **characterized in that** said temporalization step (12) of emissions due to the activities of said road transport sector comprises steps of:

- Extrapolating data linked to mobility over a period in a geographical space so as to obtain daily mobility indicators;
- Calculating the number of vehicles per kilometer per day;
- Calculating the number of vehicles per kilometer per hour;
- From the results of the previous step, calculating total hourly emissions from the road transport sector.

14. A device for generating inventories of greenhouse gas emissions from anthropogenic and/or biogenic activities, said activities being classified by activity sectors, said device being **characterized in that** it comprises, for each activity sector among an activity in the industrial sector, an activity in the residential sector, an activity in the service sector, an activity in the energy sector, an activity in the waste sector, an activity in the road transport sector, an activity in the non-road transport sector, an activity in the agricultural sector, and an activity related to indirect greenhouse gas emissions:

• Collection means adapted to collect (10) descriptive and quantitative data relating to activities emitting greenhouse gases from a plurality of databases, said collected data comprising at least real-time activity data and/or emissions data and/or time series data;
• Spatialization means adapted to implement spatialization steps (11) of greenhouse gas emissions from said activity sector in a geographical space, by combining said collected data;
• Temporalization means adapted to implement temporalization steps (12) of greenhouse gas emissions from said activity sector by combining said collected data and results of the spatialization step so as to obtain at least one value representative of greenhouse gas emissions of said activity sector, in a defined geographical area of said geographical space over a given period;

the device further comprising combining means (14) adapted to combine the results of the spatialization (11) and temporalization (12) steps of each activity sector so as to obtain a global inventory of temporalized and spatialized greenhouse gas emissions, said global inventory being formatted as a map spatializing the intensity of the greenhouse gas emissions at a defined instant.

# Fig.1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Carbon Monitor Cities, near-real-time daily estimates of C02 emissions from 1500 cities worldwide. **DA HUO et al.** ARXIV.ORG. CORNELL UNIVERSITY LIBRARY, 16 April 2022